# EUROPÄISCHE PATENTSCHRIFT

(11) **EP 0 372 256 B1**
(45) Veröffentlichungstag und Bekanntmachung des Hinweises auf die Patenterteilung: **02.03.1994**
(21) Anmeldenummer: 89120936.3
(22) Anmeldetag: 11.11.1989
(51) Int. Cl.: H02H 7/045, H02H 3/38

(54) **Verfahren zum Schutz eines Transformators und Vorrichtung zur Durchführung des Verfahrens**
Method for the projection of a transformer and device for carrying out the method
Procédé de protection d'un transformateur et dispositif de mise en oeuvre du procédé

(30) Priorität: 05.12.1988 DE 3840887
(43) Veröffentlichungstag der Anmeldung: 13.06.1990
(73) Patentinhaber: ASEA BROWN BOVERI AG, 5400 Baden (CH)
(72) Erfinder: von Allmen, Markus, CH-5426 Lengnau (CH); Kopainsky, Jürgen, Dr., CH-5200 Brugg (CH)

(56) Entgegenhaltungen:
- EP-A- 0 009 365
- DE-A- 2 246 276
- DE-A- 2 709 760
- DE-C- 899 974

## Beschreibung

### Technisches Gebiet

Die Erfindung bezieht sich auf ein Verfahren zum Schutz eines Transformators mittels eines Differentialschutzes und auf eine Vorrichtung zur Durchführung des Verfahrens.

### Technologischer Hintergrund und Stand der Technik

Aus der Schrift von Keizo Inagaki et al. "Digital protection method for power transformers based on an equivalent circuit composed of inverse inductance" (87 SM 629-9, 1987 IEEE) ist z.B. bekannt, wie ein herkömmlicher Differentialschutz für einen Transformator ausgebildet werden muss. Insbesondere ist bekannt, dass Einschaltstösse zu Fehlauslösungen des Differentialschutzes führen können, wenn nicht besondere Massnahmen getroffen werden, um dies zu verhindern. Als übliche derartige Massnahme wird die zweite harmonische Oberschwingung detektiert, die bei Einschaltstromstössen vergleichsweise besonders stark ausgebildet ist, sodass in diesem Fall eine Auslösung des Differentialschutzes blockiert wird. Für die Detektion der zweiten harmonischen Oberschwingung ist ein Filter erforderlich, um dessen Einschwingdauer die Auslösung des Differentialschutzes verzögert ist. Dies hat zur Folge, dass der Schutz, der beispielsweise bei inneren Trafokurzschlüssen unmittelbar nach dem Auftreten des Fehlers auslösen könnte, wegen der stets erfolgenden Überwachung der zweiten harmonischen Oberschwingung, immer nur verzögert ansprechen kann. Besonders bei inneren Kurzschlüssen wirkt sich eine derartige Verzögerung nachteilig aus.

Aus der Schrift EP-A1-0 009 365 ist ein Differentialschutz für Transformatoren bekannt, bei dem an den Ein- und Ausgängen der Transformatoren die Ströme und Spannungen detektiert und miteinander verknüpft werden. Die auf diese Art gewonnenen Leistungsangaben werden, abhängig vom jeweiligen Betriebs- bzw. Fehlerfall, mit positivem oder negativem Vorzeichen versehen, in eine Auswerteeinheit eingebracht. In dieser Auswerteeinheit ist eine Gleichung gespeichert, mit deren Hilfe der jeweilige Zustand des Transformators berechnet wird. In diese Gleichung werden die Leistungsangaben samt Vorzeichen als Parameter eingesetzt, und die Auswerteeinheit ist in der Lage, aufgrund der erzielten Resultate zu erkennen, ob ein Fehler vorliegt oder nicht, und entsprechende Massnahmen einzuleiten. Es wird stets die Leistungsangabe verbunden mit dem Vorzeichen übertragen und stets die gesamte Gleichung durchgerechnet, wofür ein vergleichsweise grosser Zeitaufwand benötigt wird.

Aus der Offenlegungsschrift DE - 2 246 276 ist ein Differentialschutz für Transformatoren bekannt, bei dem Prozessoren eingesetzt werden, um die durch Sensoren aufgenommenen Messdaten miteinander zu verknüpfen.

### Darstellung der Erfindung

Die Erfindung, wie sie in den Ansprüchen gekennzeichnet ist, löst die Aufgabe, ein Verfahren zum Schutz eines Transformators anzugeben, welches erlaubt innere Fehler im Transformator vergleichsweise besonders rasch zu erkennen und abzuschalten und eine vergleichsweise einfache Vorrichtung zu zeigen, welche die Durchführung dieses Verfahrens erlaubt.

Die durch die Erfindung erreichten Vorteile sind im wesentlichen darin zu sehen, dass ein verzögerungsfreies Ansprechen des Transformatorschutzes gewährleistet ist, welches insbesondere die im Zusammenhang mit inneren Kurzschlüssen auftretenden mechanischen und dielektrischen Folgenschäden minimiert. Bei ölgefüllten Transformatoren wird dadurch die Betriebssicherheit wesentlich erhöht. Ferner werden störende Netzunterbrechungen infolge von Fehlauslösungen sicher vermieden. Zudem erweist es sich als vorteilhaft, dass auch hochohmige Fehler, d.h. Fehler mit vergleichsweise kleinen Fehlerströmen, sicher erfasst und verlässlich abgeschaltet werden können.

Die weiteren Ausgestaltungen der Erfindung sind Gegenstände der abhängigen Ansprüche.

Die Erfindung, ihre Weiterbildung und die damit erzielbaren Vorteile werden nachstehend anhand von Zeichnungen, welche lediglich eine Ausführungsmöglichkeit darstellen, näher erläutert.

### Kurze Beschreibung der Zeichnung

Es zeigen:
- Fig.1: eine erste Ausführungsform der erfindungsgemässen Vorrichtung, und
- Fig.2: einen tabllarischen Überblick

### Weg zur Ausführung der Erfindung

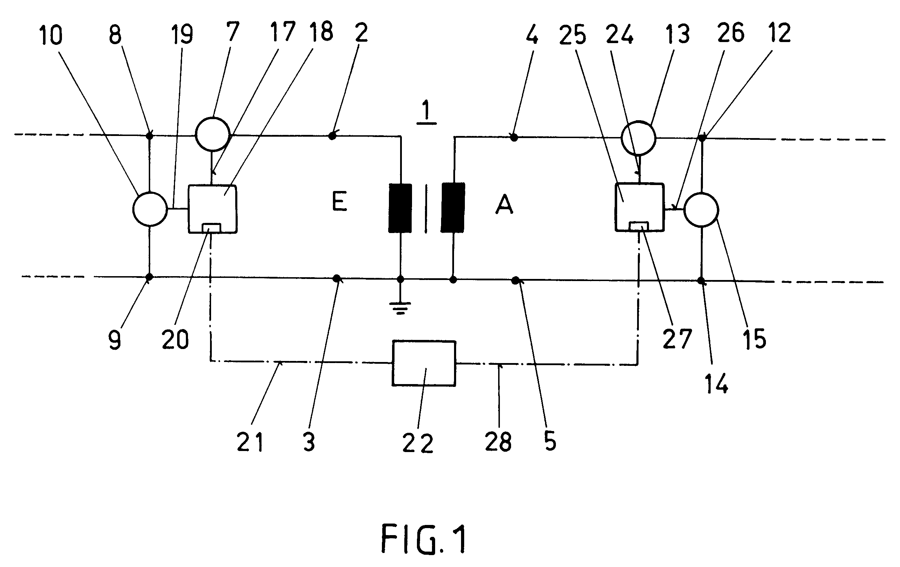

In Fig.1 ist ein Transformator 1 dargestellt, welcher einen Eingang E und einen Ausgang A aufweist. Der Eingang E weist Eingangsklemmen 2,3 auf, der Ausgang A weist Ausgangsklemmen 4,5 auf. Die Eingangsklemme 3 ist gemeinsam mit der Ausgangsklemme 5 an Erde gelegt. Anstelle dieser Erdung können die Klemmen 3,5 auch ein anderes gemeinsames Potential aufweisen oder auch unterschiedliche Potentiale. Die Eingangsklemme 2 ist über einen Stromwandler 7 mit einer Klemme 8 verbunden, welche als Verbindung zu einem nicht dargestellten Teil eines elektrischen Netzes dient. Eine weitere Klemme 9 stellt den zweiten Pol obiger Netzverbindung dar, sie ist mit der Eingangsklemme 3 elektrisch leitend verbunden. Zwischen die Klemmen 8 und 9 ist ein Spannungswandler 10 geschaltet. In gleicher Weise ist auch der Ausgang A beschaltet. Zwischen der Ausgangsklemme 4 und einer Klemme 12 ist ein Stromwandler 13 vorgesehen. Die Klemme 12 ist eine Verbindung zu einem weiteren, ebenfalls nicht dargestellten Teil eines elektrischen Netzes. Eine Klemme 14 stellt den zweiten Pol dieser Verbindung dar. Die Klemme 14 ist mit der Ausgangskjlemme 5 elektrisch leitend verbunden. Zwischen die Klemmen 12 und 14 ist ein Spannungswandler 15 geschaltet.

Ein Signalausgang des Stromwandlers 7 ist über eine Leitung 17 mit einem Prozessor 18 verbunden, ebenso der Spannungswandler 10 über eine Leitung 19. Der Prozessor 18 weist einen mit einem Filter 20 versehenen Ausgang auf, welcher, wie durch eine Wirkungslinie 21 angedeutet, mit einer Auswerteeinheit 22 in Wirkverbindung steht. Gleicherweise ist ein Signalausgang des Stromwandlers 13 über eine Leitung 24 mit einem Prozessor 25 verbunden, und ebenso der Spannungswandler 15 über eine Leitung 26. Der Prozessor 25 weist einen mit einem Filter 27 versehenen Ausgang auf, welcher, wie durch eine Wirkungslinie 28 angedeutet, mit der Auswerteeinheit 22 in Wirkverbindung steht.

Die Fig.1 kann sowohl als Teil eines zweiphasigen Netzes betrachtet werden, als auch als einpolige Darstellung eines mehrphasigen Netzes. Im letzteren Fall ist jedoch nur eine gemeinsame Auswerteeinheit 22 für alle Phasen vorgesehen.

Zur Erläuterung der Wirkungsweise sei die Fig.1 näher betrachtet, wobei von einem zweiphasigen Netz ausgegangen wird. Die Messwerte des Stromwandlers 7 und die des Spannungswandlers 10 werden im Prozessor 18 miteinander verknüpft. Wenn ein Fehler im Netz auftritt, so resultiert aus dieser Verknüpfung ein Fehlerrichtungssignal, welches zur weiteren Verarbeitung, wie durch die Wirkungslinie 21 angedeutet, in die Auswerteeinheit 22 gelangt. Besonders vorteilhaft, da vergleichsweise besonders wenig empfindlich, wird statt des gesamten Fehlerrichtungssignals lediglich das Vorzeichen desselben übertragen, welches in Form eines binären Gleichstromsignals in die Auswerteeinheit 22 übertragen wird. Der Filter 20 am Ausgang des Prozessors 18 filtert alle übrigen Signalbestandteile aus. In gleicher Weise arbeitet der Prozessor 25 auf der Ausgangsseite des Transformators 1, der die Messwerte des Stromwandlers 13 und des Spannungswandlers 15 miteinander verknüpft und ein Fehlerrichtungssignal, wie durch die Wirkungslinie 28 angedeutet, in die Auswerteeinheit 22 schickt. Auch hier ist es vorteilhaft, wenn lediglich das Vorzeichen des Fehlerrichtungssignals in Form eines binären Gleichstromsignals übertragen wird.

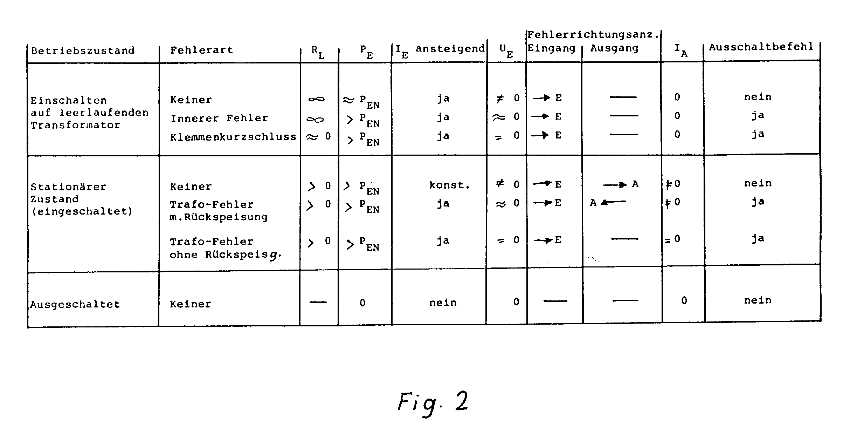

Fig. 2 zeigt einen tabellenartigen Überblick über die von der Auswerteeinheit 22 logisch zu verarbeitenden Messdaten und Signale in Abhängigkeit vom Betriebszustand und der jeweiligen Fehlerart und die zu generierenden Ausschaltbefehle. Dieser Überblick gilt für einen Transformator mit einem Leistungsfluss vom Eingang E zum Ausgang A und hier speziell für die Eingangsseite. Der Index E steht jeweils bei Werten, die auf die Eingangsseite bezogen sind, der Index A dagegen bei Werten die sich auf die Ausgangsseite beziehen.R_{L} steht für die ohmsche Komponente einer Impedanz, die im Wesentlichen aus induktiven Anteilen zusammengesetzt ist. P_{E} steht für die eingangsseitig eingespeiste Wirkleistung und als P_{EN} ist die eingespeiste Normalleistung, d.h. die Wirkleistung die im normalen, fehlerfreien Betrieb fliesst, bezeichnet. I_{E} ist der eingangsseitig fliessende Strom, U_{E} ist die am Eingang E anstehende Spannung. Die Symbole für die Fehlerrichtungsanzeige bedeuten: →E und A← Fehler in Richtung Transformatorinneres, →A Leistungsfluss nach ausserhalb des Transformators. I_{A} ist der am Ausgang des Transformators fliessende Strom. Der Ausschaltbefehl wirkt auf Schaltgeräte, die im elektrischen Netz vor und nach dem betreffenden Transformator 1 angeordnet sind und welche diesen strom- und spannungslos schalten können.

Wenn also jetzt zum Beispiel auf einen leerlaufenden Transformator mit einem inneren Fehler eingeschaltet wird, so stellt die Auswerteeinheit 22 des Differentialschutzes fest, dass die Impedanz R_{L} im ersten Augenblick sehr gross, also praktisch unendlich ist, dass die in den Transformator fliessende Leistung grösser als die Normalleistung P_{EN} ist, dass der eingangsseitige Strom I_{E} ansteigt, dass die eingangsseitige Spannung ungleich Null ist, dass der Prozessor 18 einen Fehler anzeigt in Richtung Transformatorinneres, dass der Prozessor 25 nichts anzeigt, und dass der ausgangsseitige Strom I_{A} Null ist.

Die logische Verknüpfung all dieser Angaben führt unmittelbar und sehr rasch zu einem eindeutigen Ausschaltbefehl auf die vorgesehenen Schaltgeräte. Es ist also unwichtig ob dieser innere Fehler hochohmig ist, sodass nur ein vergleichsweise kleiner Fehlerstrom auftritt, oder ob dieser Fehler niederohmig ist mit entsprechend höherem Fehlerstrom.
Es ist jedoch auch möglich, dass, abhängig von der Bauart des Transformators, die Detektion innerer Fehler im Transformator beim Einschalten auf den leerlaufenden Transformator schwierig ist. In solchen Fällen ist es sehr leicht möglich aus den verfügbaren Messdaten weitere Informationen zu gewinnen, wie z.B. Informationen über den zeitlichen Verlauf der gemessenen Wirkleistung, und aus diesen weitere Kriterien abzuleiten, welche die korrekte Erkennung des jeweiligen Fehlers sicherstellen.

Mit diesem Differentialschutz kann demnach jeder Fehlertyp im Transformator 1 erkannt und von normalen Betriebszuständen bzw. Vorgängen bei normalen Schaltvorgängen unterschieden werden, sodass nur im Fehlerfall Schalthandlungen im Netz zum Schutze des Transformators 1 ausgelöst werden. Die betriebliche Verfügbarkeit des Netzes wird dadurch vergrössert.

Die Reduzierung der Fehlerrichtungsanzeige auf ein binäres Gleichstromsignal ist besonders vorteilhaft, da die Kommunikationsdauer zwischen den Prozessoren 18 und 25 und der logischen Auswerteeinheit 22 auf ein Minimum beschränkt wird. Die begrenzte Dynamik, die im digitalen System die Kommunikation behindert, kann sich hier, wo nur ein binäres Gleichstromsignal anstelle einer Signalfolge übertragen wird, nicht schädlich, d.h. zeitverzögernd, auswirken, sodass der Schutz stets rascher anspricht als vergleichsweise ähnlich selektive Schutzarten.

## Patentansprüche

1. Verfahren zum Schutz eines Transformators (1) mittels eines Differentialschutzes, bei welchem sowohl am mindestens einen Eingang (E) des Transformators (1) als auch an dessen mindestens einem Ausgang (A) der jeweilig fliessende Strom und die Spannung mittels Sensoren detektiert wird, dadurch gekennzeichnet, daß sowohl am mindestens einen Eingang (E) als auch am mindestens einen Ausgang (A) die jeweiligen Strom- und Spannungswerte in jeweils einem Prozessor (18,25) miteinander verknüpft werden,
- dass jede dieser Verknüpfungen bei Vorhandensein eines Fehlers jeweils ein Fehlerrichtungssignal erzeugt, und
- dass lediglich das Vorzeichen der jeweiligen Fehlerrichtungssignale in eine Auswerteeinheit (22) geleitet wird zu einer logischen Weiterverarbeitung.

2. Verfahren nach Anspruch 1, dadurch gekennzeichnet,
- dass das Vorzeichen der jeweiligen Fehlerrichtungssignale in Form eines binären Gleichstromsignals übertragen wird.

3. Vorrichtung zur Durchführung des Verfahrens gemäss Anspruch 1 mit einem, mindestens je einen Eingang (E) und mindestens je einen Ausgang (A) aufweisenden Transformator (1), mit mindestens je einem Sensor für Stromdetektion und mindestens je einem Sensor für Spannungsdetektion am mindestens einen Eingang (E) und am mindestens einen Ausgang (A), dadurch gekennzeichnet, daß jeweils ein Prozessor (18,25) sowohl am Eingang (E) als auch am Ausgang (A) mit den jeweiligen Sensoren in Wirkverbindung steht und deren Messwerte jeweils miteinander verknüpft,
- dass jeder dieser Prozessoren für die Erzeugung eines Fehlerrichtungssignals im Fehlerfall ausgelegt ist, und
- dass in jedem dieser Prozessoren (18, 25) zudem ein Filter (20,27) vorgesehen ist, welches jeweils lediglich das Vorzeichen des Fehlerrichtungssignals umgesetzt in ein binäres Gleichstromsignal in eine Auswerteeinheit (22) gelangen lässt, welche so ausgebildet ist, dass sie im Fehlerfall Abschaltbefehle generiert.

## Claims

1. Method for protecting a transformer (1) by means of a differential protection, in which the respectively flowing current and the voltage are detected by means of sensors both at the at least one input (E) of the transformer (1) and at its at least one output (A), characterized in that the respective current and voltage values are combined with one another in one processor (18, 25) in each case both at the at least one input (E) and at the at least one output (A),
- in that each of these combinations produces in each case a fault direction signal given the presence of a fault, and
- in that merely the sign of the respective fault direction signals is passed into an evaluation unit (22) for further logical processing.

2. Method according to Claim 1, characterized in that the sign of the respective fault direction signals is transmitted in the form of a binary DC signal.

3. Device for carrying out the method according to Claim 1, having a transformer (1) which has in each case at least one input (E) and in each case at least one output (A), and having in each case at least one sensor for current detection and in each case at least one sensor for voltage detection at the at least one input (E) and at the at least one output (A), characterized in that in each case one processor (18, 25) is operatively connected both at the input (E) and at the output (A) to the respective sensors and their measurement values are combined with one another in each case,
- in that each of these processors is configured to produce a fault direction signal in the event of a fault, and
- in that additionally, in each of these processors (18, 25) a filter (20, 27) is provided which in each case allows only the sign of the fault direction signal, converted into a binary DC signal, to pass into an evaluation unit (22) which is constructed in such a way that it generates switch-off commands in the event of a fault.

## Revendications

1. Procédé pour la protection d'un transformateur (1) au moyen d'une protection différentielle, dans lequel à au moins une entrée (E) et à au moins une sortie (A) du transformateur (1), l'intensité et la tension qui passent, respectivement, sont détectées au moyen de capteurs, caractérisé en ce qu'à au moins une entrée (E) et à au moins une sortie (A), les valeurs d'intensité et de tension respectives sont combinées l'une avec l'autre, chaque fois dans un processeur (18, 25);
- que chacune de ces combinaisons, en cas de présence d'une erreur, produit chaque fois un signal de sens d'erreur, et
- que seul le signe des signaux de sens d'erreur respectifs est introduit dans une unité d'évaluation (22) en vue d'un traitement logique ultérieur.

2. Procédé suivant la revendication 1, caractérisé en ce que :
- le signe de chacun des signaux de sens d'erreur est transmis sous la forme d'un signal de courant continu binaire.

3. Dispositif pour l'exécution du procédé suivant la revendication 1, comportant un transformateur (1) présentant au moins une entrée individuelle (E) et au moins une sortie individuelle (A), avec au moins un capteur individuel pour la détection de l'intensité et au moins un capteur individuel pour la détection de la tension et à au moins une entrée (E) et à au moins une sortie (A), caractérisé en ce que des processeurs (18, 25) sont en liaison active, pour l'un à l'entrée (E) et pour l'autre à la sortie (A), avec les capteurs correspondants et les valeurs de mesure de ces capteurs sont chaque fois combinées l'une avec l'autre;
- que chacun de ces processeurs est conçu pour la production, en cas d'erreur, d'un signal de sens d'erreur, et
- que dans chacun de ces processeurs (18, 25) est, en outre, prévu un filtre (20, 27) qui n'envoie à une unité d'évaluation (22) chaque fois que le signe du signal de sens d'erreur converti en un signal de courant continu binaire, cette unité d'évaluation étant conçue de telle sorte qu'en cas d'erreur elle élabore des instructions de déclenchement.
